# EUROPEAN PATENT SPECIFICATION

(11) **EP 3 383 975 B1**
(45) Date of publication and mention of the grant of the patent: **13.05.2020**
(21) Application number: 16810272.1
(22) Date of filing: 30.11.2016
(51) Int. Cl.: C10J 3/26, C10J 3/84, C10J 3/72, C10K 1/28, C10K 1/32, C10B 49/06

(54) **METHOD AND APPARATUS FOR STORING RENEWABLE ENERGY AS GAS**
VERFAHREN UND VORRICHTUNG ZUR SPEICHERUNG VON ERNEUERBARER ENERGIE WIE GAS
PROCÉDÉ ET APPAREIL DE STOCKAGE D'ÉNERGIE RENOUVELABLE SOUS FORME DE GAZ

(30) Priority: 01.12.2015 DK 201570784
(43) Date of publication of application: 10.10.2018
(73) Proprietor: A J Inventing V/A Jarl Jacobsen, 2600 Glostrup (DK)
(72) Inventor: JACOBSEN, Anker Jarl, 2600 Glostrup (DK)
(74) Representative: Zacco Denmark A/S
(86) International application number: PCT/EP2016/079303
(87) International publication number: WO 2017/093329

(56) References cited:
- US-A1- 2007 261 948
- US-A1- 2015 321 912
- JOSÉ CORELLA ET AL: "Biomass Gasification with Air in Fluidized Bed: Reforming of the Gas Composition with Commercial Steam Reforming Catalysts", INDUSTRIAL & ENGINEERING CHEMISTRY RESEARCH., vol. 37, no. 12, 11 November 1998 (1998-11-11), pages 4617-4624, XP055336212, US ISSN: 0888-5885, DOI: 10.1021/ie980254h

## Description

### Field of the invention

The present invention is in the field of gas production and more particularly relates to a method and an apparatus for the production of product gas from carbonaceous material such as biomass e.g. by the use of renewable energy sources. The method and apparatus according to the invention employ direct heat transfer between carbonaceous material and a hot gas where the product gas is reheated and recycled through a carbonaceous material.

### Background of the invention

It is well known to produce gas such as synthesis gas, which is a mixture primarily consisting of CO and H₂ from fossil materials such as coal and crude oils, see e.g. US 5,637,259.

However, since fossil materials are available only in limited amounts scientists have focussed on the production of synthesis gas from renewable raw materials such as raw materials derived from plants i.e. biomass. Examples of such biomasses are wood, straw, waste paper, municipal solid waste and mixtures thereof.

It is well known that by heating wood materials to a temperature above 350°C under anaerobic conditions the wood materials give off gaseous and liquid substances leaving behind charcoal. When the charcoal is reacted with carbon dioxide and water at higher temperatures synthesis gas is formed. Another way of obtaining synthesis gas is by cracking long-chained and poly(cyclic) compounds such as tar materials.

The composition of the produced synthesis gas can be controlled e.g. by separation of carbon dioxide see e.g. US 6,133,328.

EP 971017A2 discloses a method and a device for converting solid fuel into a lean gas having low calorific value for direct use in an internal combustion engine. The fuel is heated to a temperature effecting pyrolysis and subjecting a further treatment at a temperature ensuring that long-chain and/or poly(cyclic) hydrocarbon compounds are cracked thermally.

WO 2005/026296 and its corresponding national US-application, US 2007/261948 A1 disclose a method and apparatus for producing product gas from biomass by heating a heat storing means with hot flue gases originating from burning of a combustible gas. One embodiment illustrated in this document shows an apparatus comprising two reactors containing biomass which reactors both at the lower and the upper end are connected by a piping through which gas can be circulated through both reactors. The piping connecting the lower ends comprises two burning chambers (25, 42) in which burning chambers combustible gas can be burned. Heat storing means (1) are placed between the two burning chambers. The heat storing means comprises a volume of inorganic porous matter. The heat storing means is heated to a temperature of around 1000-1400 °C by hot flue gases in one step and in a following step a gaseous medium constituted of the gases present in the system as such comprising the biomass reactors and the heat storing means is circulated in reverse direction through first one biomass reactor then the second biomass reactor and then through the connecting pipe in direct contact with the inorganic porous matter of the heat storing means causing the circulating gaseous medium to be heated in the heat storing means and cooled in the biomass reactors. When the heat storing means are cooled to a level where the gasification process in the first biomass reactor decreases significantly, then circulation of the gaseous medium is stopped and combustible gas is burned in one of the combustion chambers where after the heat storing means are reheated. During the heating process no gasification takes place in the biomass reactors and as the temperature of the heating means decreases during the gasification step, the temperature of the gaseous medium varies from around 900-1100°C to around 1200-1400°C. These production conditions resulting from the construction of the embodiment result in uncontrolled variations of the produced gas, a relatively high content of nitrogen in the produced gas and periods where no gas is produced lowering the efficiency of the system. As it is necessary to let in air in order to heat the system, nitrogen slips into the product gas and also product gas slips out of the system together with the waste gas leaving the system.

US 2015/0321912 A1 discloses a method of carrying out heat-consuming processes wherein the total energy required averaged over a year for the heat-consuming process originates from at least two different energy sources, where one of the energy sources is an electric energy source whose power varies in the range from 0 to 100% of the total power required, and three different energy modes can individually provide the total power required for the heat-consuming process: (i) exclusively electric energy, (ii) a mixture of electric energy and at least one further nonelectric energy source or (iii) exclusively nonelectric energy, where the changeover time in which the change from one energy mode to another energy mode is completed is not more than 30 minutes.

US 2011/203537 discloses an apparatus for producing gas by gasification of biomass while adding electrical energy. The apparatus comprises a gasifier (33) in which the biomass is gasified to a gas mixture while adding electrical energy ([0084]). At the upper end of the housing of the gasifier (33) a heating device (34) is arranged in which the gas mixture generated in the gasification is further heated electrically and introduced into a heat exchanger (35). The heat exchanger (35) comprises a reformer for reforming the gas mixture generated during gasification and conducts the reformed gas mixture within the housing of the gasifier (33) in a direction opposite to the ascending gas mixture generated by gasification. Recirculating the gas through the reformer reduces the amount of undesired components in the form of long-chained carbon compounds or hydrocarbon compounds ([0009]-[0010]). The heating of the biomass in the gasifier (33) is apparently not performed by sending heated gas through the biomass in direct contact with the biomass; the heating is likely performed by heating one or more walls of the gasifier with electrical energy. It is not indicated in the document which temperature the gas is heated to in the heating device (34) and it is not indicated anywhere in the document which temperatures are applied in the total system. The apparatus disclosed in the document cannot be operated continuously [0015] if a complete recirculation of the gas takes place and it cannot be operated without a scrubber which normally removes fine char, ash particulates, particulate and condensed tars and other trace contaminants although this is not described in the document.

It is an object of the present invention to provide a method and an apparatus for producing a product gas from biomass by a continuous and non-pollutant process showing a high efficiency, providing a high degree of control over the conditions in the apparatus and providing a product gas with a very low content of nitrogen and tar. The increased control over the conditions inside the apparatus will make it possibility to control the composition of the product gas to the highest possible degree. The composition of the product gas will of cause also depend on the biomass used as raw material for the process.

It is a second object of the present invention to provide a method and apparatus for storing renewable energy sources such as electrical energy from wind and solar power in the form of product gas. A major challenge in an energy infrastructure relying on electricity production from renewable resources such as wind and solar power is the fluctuating productivity. To stabilise a system against fluctuating imbalances between supply and demand of energy it is necessary to store large amounts of energy from periods with high renewable energy output to periods with low energy output.

Another object of this invention is to provide a method and apparatus for producing a product gas and having continuous or almost continuous output and high quality output of product gas. "Almost" continuous means there normally will be fluctuations in the output, i.e. it will be possible to constantly remove a flow of product gas from the process but the amount will not be constant.

Another object of this invention is to increase the output of gas production from a biomass such as wood chip.

Yet another object of this invention is to convert electrical energy from e.g. wind and solar power plants to a storable energy resource. I.e. the product gas produced by the invention contains more energy than what is supplied by the carbonaceous material; it also contains part of the energy supplied by the electrical source.

Yet a further object of this invention is to manufacture a product gas which can be further processed into gaseous or liquid products e.g. to be used as fuel or for other purposes.

Yet another object of this invention is to manufacture synthesis gas for use as fuel, e.g. for combustion engines or fuel cells.

Still another object of this invention is to provide a method for the production of synthesis gas containing only an insignificant amount of contaminants.

### Summary of the invention

The present invention is detailed herein below and in the claims.

The present disclosure provides a method for the production of product gas from carbonaceous feed material, comprising the steps of:
a) heating a gaseous medium by thermal energy,
b) transporting the heated gaseous medium to a first reactor containing carbonaceous feed material,
c) heating the carbonaceous feed material in the first reactor to a temperature of at least 400 °C by means of the heated gaseous medium so as to form components of a product gas, the gaseous medium of step c) is directed to a second reactor containing carbonaceous feed material and the gaseous medium is forced through the carbonaceous feed material of the second reactor,
d) withdrawing at least part of the product gas after the gaseous medium has passed the carbonaceous feed material of the second reactor, and
e) recirculating the rest of the gaseous medium to the first reactor thereby continuing the production of product gas through steps (a)-(d), the circulation of gaseous medium from the first reactor to the second reactor continuous until a set point has been reached and/or until a pre-set time has been reached and then the direction in which the gas is circulated is reversed, wherein the heating performed in step (a) is provided by an electrical source.

Normally, the thermal energy of step (a) is supplied to the circulating gas between the hot ends of the first and the second reactor respectively.

In step (c) the carbonaceous material may be heated as a result of direct contact between the heated gaseous medium and the carbonaceous material. During operation the gaseous medium in step (c) leaves the cold end of the first reactor and enters the cold end of the second reactor.

As the gas direction is changed the naming of each reactor is changed, i.e. the reactor immediately downstream of the heating position is referred to as the "first" reactor, whereas the reactor upstream of the heating position and downstream of the "first" reactor is referred to as the "second" reactor. When the gas direction is reversed, the "second" reactor becomes the "first" reactor and the "first" reactor becomes the "second" reactor.

Generally, the temperature of the gaseous medium in step (a) is above 800°C, e.g. above 1000°C and e.g. the temperature is between 1100 and 1400 °C. The gaseous medium is heated to this temperature in step (a) when the gaseous medium is brought into contact with the electrical heating source and the gaseous medium will normally have approximately the same temperature when entering the first reactor as the transport time between the heating unit and the first reactor normally is relative short. Alternatively, the transport pathway between the heating unit and the first reactor may be isolated in order to reduce temperature reduction of the heated gaseous medium. The temperature of the gaseous medium is normally reduced from the temperature of step (a) to about 100-400 °C when leaving the section containing biomass in the reactor of step (b).

The heating applied in step (a) may be the only energy applied to the process i.e. heating is e.g. only applied between the hot ends of the first and the second reactor.

A layer of charcoal may be formed in the first and in the second reactor, the presence of the charcoal causes tar in the product gas to be broken down. The amount of charcoal in a reactor, i.e. the thickness of the layer of charcoal, can be controlled by controlling the temperature of the gaseous medium and the amount of gas circulated as it requires a temperature above approximately 800 °C to decompose or disintegrate charcoal while a temperature between approximately 400-800 °C is adequate to decompose or disintegrate a carbonaceous material such as wood. The low-temperature zone of a reactor i.e. where the temperature is below 350-400 °C will contain the raw carbonaceous material as the carbonaceous material is only dried in this zone. The low-temperature pyrolysis-zone of a reactor where the temperature is kept above approximately 400 °C and below approximately 800 °C will contain a mixture of charcoal and carbonaceous material. The high-temperature pyrolysis-zone of a reactor i.e. where the temperature is above 800 °C will contain a mixture of charcoal and ashes. The exact temperatures defining the transition from one zone to the next generally depend on the carbonaceous material present in the reactors and on other parameters such as the humidity of the carbonaceous material. By controlling the temperature of the incoming gas to the reactor it is generally possible to control the thickness of the charcoal layer as temperatures in the high-temperature pyrolysis-zone removes charcoal and reduce the layer, whereas temperatures in the low-temperature pyrolysis-zone build-up charcoal and increase the layer.

Product gas is formed in the first reactor by passing the heated gaseous medium through the biomass. The product gas originating from decomposition of the biomass will normally contain contaminants such as tar and other high molecular weight substances. However, when the product gas is passed through the hot charcoal of the second reactor the tar and other high molecular weight substances such as long-chained molecules present in the product gas is removed by cracking. Nitrogen present in the product gas might be introduced as a component of the carbonaceous material and another source of nitrogen might be air entering the gasification apparatus. The part of nitrogen added by the carbonaceous material cannot be avoided; the part of nitrogen introduced by air entering the gasification apparatus can be kept to a minimum when air has no function as such in an apparatus as the apparatus therefore can be constructed with as little air-inlet as economically sustainable. It might be rather expensive to remove all air from the feed material but it could increase the value of the product gas if the air intake provided by the feed material was reduced.

In one embodiment the gaseous medium before step d) is forced through a catalysing zone wherein Volatile Organic Compounds (VOCs) are converted to H₂, CO and CO₂. VOC's are larger organic compounds including tar and long-chained molecules. The catalysing zone may also be used for removing other volatile compounds from the gaseous medium; this may require that the catalyst is adapted to specific compounds. In one embodiment the catalysing zone might comprise metal oxides.

In one embodiment the heated gaseous medium contains vaporised H₂O, and charcoal formed from the biomass will break down when the heated gaseous medium containing H₂O passes through the carbonaceous material. A break down product of charcoal is ash. In some embodiments the ash is removed from the system through an outlet at the bottom of the reactor either continuously or batch-wise.

In one embodiment the set point of step e) defines a desired value of a temperature measured in the layer of charcoal and/or carbonaceous material in the second reactor. In this section a desired temperature may be between 400 and 1200°C, between 600 and 1000°C, or between 750 and 900°C.

The flow of the product gas and/or gaseous medium from the first reactor to the second reactor may be reversed after 5-30 minutes. In other embodiments the flow direction of the product gas and or gaseous medium is reversed after 5-20 minutes or the flow direction of the product gas and or gaseous medium is reversed after 5-15 minutes or the flow direction of the product gas and or gaseous medium is reversed after 5-10 minutes. The flow direction may be reversed with the same interval throughout the production of product gas. During the period where a reactor is not subjected to heated gaseous medium i.e. the period where the reactor acts as second reactor, the reactor is cooled and the temperature in the reactor therefore drops, and in order to avoid the temperature in the second reactor becoming too low, the gas direction is reversed and then the second reactor becomes the first reactor and receives the heated gaseous medium. If the period where a reactor is acting as first reactor and is subjected to heating by the heated gaseous medium becomes too short, it might not be possible to maintain a desired temperature profile in this reactor. The period for reversing may therefore be determined by the time it takes to re-heat the content of each first reactor to a desired temperature, as long as this is kept in balance with an ingoing temperature of the gaseous medium to the first reactor allowing to maintain a proper charcoal layer in the first reactor.

In another aspect of the present disclosure, the disclosure relates to an apparatus for producing gas, said apparatus comprising at least two reactors, a first reactor and a second reactor, each reactor comprise an inlet for feed material, an inlet for hot gaseous medium, an outlet for gaseous medium including product gas, the apparatus further comprises piping means through which the gaseous medium from said first reactor can flow from an outlet of the first reactor to an inlet of the second reactor, piping means through which the gaseous medium can flow from an outlet of the second reactor to an inlet of the first reactor, and heating means in the form of one or more heating units dimensioned to heat a flowing gaseous medium upstream of the first reactor and downstream of the second reactor, wherein the heating means are electrical heating means.. The apparatus may be provided with one or more catalyst zones which catalyst zones supports removal or reduction of undesired compounds from the gas circulating in the apparatus.

The electrical source comprises one or more heating elements, and each heating element might be a metal heating element or a ceramic heating element or a plasma generator. Normally, the heating element(s) heating the gaseous medium in step (a) should be dimensioned to heat the gaseous medium to a temperature above 1000°C, e.g. above 1200°C although this might not be the operating temperature under all circumstances.

The apparatus may provide a flow of product gas of high quality while converting electrical energy to an energy form suitable for storage such as gas. Circulation of the product gas through the system removes particular and volatile compounds such as tar from the product gas.

According to one embodiment the reactors may be elongated vertically arranged reactors where the carbonaceous material is introduced into the reactor from the top. The heated gaseous medium is applied at the hot end of the first reactor which in this embodiment is the lower end of the reactor and withdrawn at the cold end which in this embodiment is the top end. Alternatively, the reactors could be elongated horizontally arranged reactors but as each reactor has the same functions in consecutive periods the two reactors will normally be identical or very similar in the sense that identical or very similar processes can be exercised in both reactors. Generally, an elongated reactor with plug flow allows for forming of specific layers in particular a charcoal layer.

In some embodiments of the present invention the piping means connecting the first reactor and the second reactor comprises a system constituted of at least one fan providing a flow in one direction and a valve system, or comprises a system constituted of at least two fans and a valve system both systems allowing gaseous medium to be transported in both directions.. The flow direction of the gaseous medium can be reversed by opening and closing the valves e.g. in combination by turning the fans on or off, if more than one fan is present.

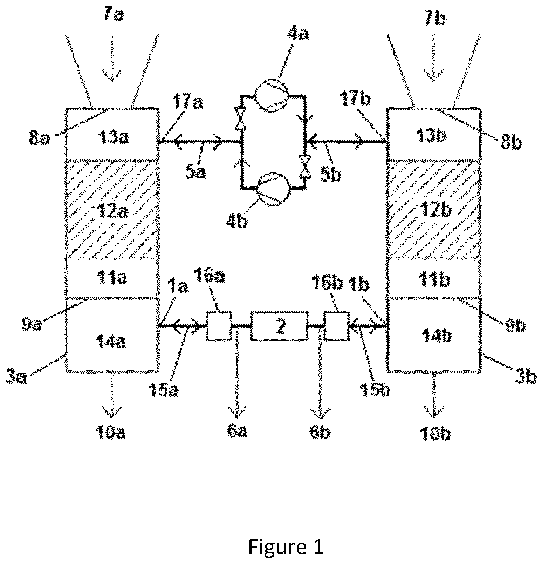

One embodiment of the invention comprises a catalyst zone (2) placed between the inlet of the first reactor and the heating means. According to one embodiment the catalyst in the catalyst zone comprise metal oxides. The effect of the catalyst zone may be optimized if the catalyst zone is passed by the gaseous medium after the gaseous medium has been re-heated by the electric heating means. This means that there may be either two catalyst zones each positioned between an electric heating unit and the inlet to the hot end of the first reactor where the first reactor is alternately one and the other reactor. Alternatively, there can be a single central catalyst zone (as exemplified in figure 1) where two electric heating units are positioned or exercise heating between the catalyst zone and an inlet to the hot end of a first reactor. Alternatively, there can be a single catalyst zone and a single central electric heating unit where the gaseous medium is heated and subjected to catalyst more or less simultaneously (not shown).

When the reactors have carbonaceous material in counter current with the heated gas, each reactor may have an outlet for ash positioned at a point near the inlet for heated gas, e.g. at the lowest point. The reactors may be provided with means for transporting ashes towards the ashes-outlet. If the reactor has an inlet for biomass at a high position, gravity may transport gasified carbonaceous material towards the outlet for ashes or alternatively, each reactor comprises means for transporting the carbonaceous material from inlet the outlet in the reactor. In one embodiment the first and the second reactor each has an outlet for ash at a low position at the lower end and an inlet for carbonaceous material at a high position at the upper end each outlet and inlet allowing for continuous and/or batch-wise release or feeding. The inlet for carbonaceous material is so configured as to not let air in to the system when the feed material is feed into the system. Further the inlet is configured so as to not let gaseous medium out of the system when feed material is feed into the system.

In embodiments where gravity transports the biomass the one or more of the reactors may comprise a plate provided with openings such as a grit at the bottom of the reactors, through which openings the gaseous medium can flow upwards in the first reactor. Charcoal may then be generated above the grit thereby allowing generated ash to pass through the openings in the grit. The ash is removed through the outlet at the bottom of the reactors.

A space containing carbonaceous material may be formed in the central part of each reactor between the inlet for heated gaseous medium and the outlet for product gas.

A layer of charcoal may be formed below the space containing carbonaceous material and each reactor may have an inlet/outlet for gaseous medium positioned below the space containing carbonaceous material and an inlet/outlet for gaseous medium positioned above the space containing carbonaceous material.

In one embodiment, the elements of the apparatus i.e. the piping, the reactors, the heating element(s) or the connection to the heating element(s) and possible the catalyst zone(s) are constructed in such a way that inlet of air or other oxygen containing gas is completely avoided or is restricted to what might enter the apparatus together with the feed material. How a skilled person would choose to construct such air-tight connections and apparatuses depend on the apparatus at hand and e.g. which carbonaceous feed material that has been chosen and where the site of the apparatus is.

In one embodiment, one or both the reactors may be counter-current fixed bed gasifier(s). In such a fixed bed reactor the fixed bed may move through the reactor in a direction from inlet of feed material to inlet of heated gaseous medium or outlet of ashes at a speed mirroring the conversion of the feed material. In one embodiment the reactors may have an elongated form providing a fixed bed with layers of varying composition.

In one embodiment, the first reactor comprises a temperature transmitter reading the temperature in the layers of charcoal and/or carbonaceous material, and/or the second reactor comprises a temperature transmitter reading the temperature in the layer of charcoal and/or carbonaceous material.

Also, disclosed is a method for controlling a process for obtaining a product gas based on carbonaceous feed material taking place in a system comprising two reactors, a first and a second reactor where "first" and "second" defines the direction of flow, each reactor holding feed material, one or more heating units, piping means connecting the two reactors at each end i.e. the cold ends and the hot ends respectively, a fan and valve system determining the direction and amount of gaseous medium circulated through the system, wherein a sensor measures a temperature in the first reactor, the output of the sensor is compared with a reference value, if the measured value drops below a first level the heating applied by the heating unit is increased, and/or a sensor measures a temperature in the second reactor, if the measured value drops below a second level the mode of the fan and valve system is changed and the direction of the gaseous medium is shifted.

In one embodiment the product produced by the apparatus of the invention is a product gas comprising H₂, CO, CO₂. In some embodiments the gas produced is treated to become a gas consisting of H₂, CO, CO₂. Further, in some embodiments the gas produced is treated to become a synthesis gas consisting of 50 % H₂, 25% CO, and 25% CO₂. Impurities from the product gas are removed by continuous circulation of the product gas through the system.

### Definition of words

**Syngas** or **synthesis gas** is a fuel gas mixture consisting primarily of hydrogen, carbon monoxide, and very often some carbon dioxide. The name comes from its use as intermediates in creating synthetic natural gas (SNG) and for producing ammonia or methanol. Syngas is usually a product of gasification and the main application is electricity generation. Syngas can be produced from many sources, including natural gas, coal, biomass, or virtually any hydrocarbon feedstock, by reaction with steam or oxygen. Syngas is a crucial intermediate resource for production of hydrogen, ammonia, methanol, and synthetic hydrocarbon fuels. Syngas is also used as an intermediate in producing synthetic petroleum for use as a fuel or lubricant via the Fischer-Tropsch process and previously the Mobil methanol to gasoline process. Syngas is combustible and often used as a fuel of internal combustion engines. It has less than half the energy density of natural gas. Synthesis gas normally comprises hydrogen, carbon monoxide and carbon dioxide in approximately the following concentrations 50 % H₂, 25 % CO and 25% CO₂.

The gas produced according to the present invention is referred to as "product gas" which might be within the general definition of synthesis gas. The product gas generally comprises a mixture of hydrogen, carbon monoxide, carbon dioxide and impurities such as VOC including tar, hydrocarbon molecules and nitrogen. The product gas produced according to the present invention is characterized by having a very low content of nitrogen (< 1%) and organic impurities (< 1%). However, the content of nitrogen in the product gas will depend on the raw material and when the raw material used for gasification is wood the N content will normally be below 0.5 wt% (100-2000 ppmv (parts per million by volume)) and for other biomass feedstocks having high N content the concentration might reach over 10.000 ppmv. Due to the high temperatures and the continued recirculation of the present invention almost all nitrogen is present in the gas as N₂.

The terms "comprising", "comprise" and "comprises" herein are intended by the inventor to be optionally substitutable with the terms "consisting of", "consist of" and "consists of" respectively, in every instance.

Tar condensates in a wide temperature range from ca. 180 to 300°C and in temperatures below zero. As the tar condensates, it creates adhesive liquid coating on cool surfaces which, together with dust, forms deposits that are very difficult to remove. If the temperature drops below condensation point, fine tar mist is formed; this mist cannot be removed from gas by common separators. Condensation temperature and tar in gas are bound by phase equilibrium.

### Brief description of the drawings

Figure 1 shows a schematic embodiment of the apparatus according to the invention comprising two vertical updraft biomass reactors.
Figure 2 shows the same schematic embodiment as shown in fig. 1 including a temperature profile of an embodiment of the apparatus during operation, where one reactor is defined as first reactor and the other reactor is defined as second reactor.
Figure 3 shows an embodiment of a system comprising a single fan and four valves which can send gaseous medium in two directions.

### Detailed description of the invention

In describing the embodiments of the invention specific terminology will be resorted to for the sake of clarity. However, the invention is not intended to be limited to the specific terms so selected, and it is understood that each specific term includes all technical equivalents which operate in a similar manner to accomplish a similar purpose.

The present invention is directed to an apparatus and a method for processing a carbonaceous product to generate a product gas comprising H₂, CO and CO₂. As will be described herein below, the apparatus of the present invention includes a number of different distinct elements that together allow for an efficient process flow from material input to product gas output. In some instances the product gas may be further treated to result in a refined output which is e.g. destined to use as a fuel.

The carbonaceous feed material used to generate a product gas in the present invention is normally at least partly a biomass product. Wood chip or other biomass products able to generate charcoal are suitable for use as a feed material in the present invention. Generally, feed material is converted to a product gas in a reactor functioning through heated gaseous medium flowing through a counter currently moving volume of biomass, in the embodiment shown in the figures the heated gaseous medium flows upwards through a downward moving volume of biomass. This allows for the biomass to move entirely by the effect of gravitation force which means that it is not necessary to use energy to move the biomass through the biomass reactor. The carbonaceous material should at least partially comprise a solid structure and be able to contribute to formation of a layer of charcoal in order to form a volume which might be penetrated and in close direct contact with a hot gas; but there are no actual restrictions to the kind of carbonaceous material which might be subjected to gasification in the apparatus of the invention e.g. the biomass can have a high content of water, or have a high ash content etc. In case it is desired to add a completely liquid carbonaceous material to the reactor a carbonaceous support material such as wood can be added in order to form a solid structure.

The heating element(s) used to heat the gaseous medium in the present invention is an electrical heating element. According to some embodiments, excess electrical energy from e.g. wind mills; water power plants etc. can be used to heat the gaseous medium. Generally, the electrical element is constituted by one or more heating elements, and each heating element might be a metal heating element or a ceramic heating element or a plasma generator or a combination of different types of elements. The heating element(s) heating the gaseous medium in step (a) may be dimensioned to heat the gaseous medium to a temperature above 1200°C although this might not be the standard operating temperature. The one or more heating units may be placed at a connection between the two reactors which connection leads a flow of gaseous medium from the cold end of one reactor to the hot end of the other reactor.

The apparatus of the invention offers the advantages of providing a continuous flow of product gas of high quality and of converting electrical energy to an energy form suitable for storage such as gas.

Figure 1 illustrates an apparatus according to the invention. The embodiment of the apparatus shown in fig. 1 comprises two similar vertical reactors 3a and 3b to be described in greater detail below. Generally, the reactors need not be neither vertical nor similar but each reactor should be able to provide the necessary functions for this use i.e. having an inlet for feed material and an inlet for heated gaseous medium, having an outlet for product gas and an outlet for ashes etc. and also each reactor should be able to withstand the relatively high temperatures and transport of solid and gaseous media. The apparatus comprises at least two reactors as it is directed to a continuous gas production providing both high quality of the product gas and large amounts of product gas, and depending on the flow direction each of the at least two reactors either acts as first or second reactor, where the first reactor is the reactor where the heated gaseous medium enters the reactor at the hot lower end and the primary gasification occurs. The second reactor is the reactor where no gasification takes place but impurities such as e.g. tar and other larger organic molecules are removed from the product gas.

The reactors 3a and 3b function through updraft gasification and each reactor comprises four sections when in operation: an ash section 14a, 14b, a charcoal section 11a, 11b positioned above the ash section 14a, 14b, a biomass section 12a, 12b positioned above the charcoal section 11a, 11b, and an upper section 13a, 13b positioned above the biomass section 12a, 12b at the top of the reactor. The outlet for gaseous medium is positioned in the upper section 13a, 13b and as the gaseous medium on the way upwards in the first reactor passes through the biomass which has been subjected to least treatment, part of the particulate material formed in the lower hot sections of the reactor will be adsorbed in the biomass instead of being carried with the flow of gaseous medium.

The biomass section 12a, 12b is dimensioned to hold the feed material i.e. the biomass, such as wood chip which has been fed into the reactor at the desired temperature for the specific biomass which may be between 400-800°C. The charcoal section 11a, 11b is dimensioned to hold charcoal generated from the feed material. The desired temperature in this section may be between 800-1200°C. A grate 9a, 9b is located at the bottom of charcoal section 11a, 11b allowing ash to pass through the grate into the ash section 14a, 14b of the reactor while securing an open space below the charcoal section 11a, 11b allowing an equal distribution of the upwardly flowing hot gasses. The ash section of the reactor 14a, 14b comprises an outlet 10a, 10b for removing by-products such as ash at the bottom of the reactor. The outlet can be constructed to allow continuous removal of ashes or it can be constructed to allow batch-wise removal of ashes. Further ash section 14a, 14b of the reactor has an inlet 1a, 1b connected to a conduit 15a, 15b allowing the heated gaseous medium to enter the reactor normally at a temperature above 1200°C. The inlet may also function as an outlet for product gas when the reactor is acting as second reactor depending on the flow direction. Alternatively, the gaseous medium may not enter into the reactor through same opening(s) as it exits the reactor.

Each reactor comprises a feed inlet 7a, 7b for solid carbonaceous material. The upper part of the first reactor 13a has a feed inlet 7a allowing solid feed to be introduced into the reactor without letting any gaseous medium out of the reactor during the feeding process. The construction of such a connection between section 13a, 13b and the feed inlet 7a, 7b will be clear to any person skilled in the art. Further, the upper section of each reactor 3a, 3b has an inlet/outlet 17a, 17b connected to a conduit 5a, 5b allowing gaseous material formed in the first reactor 3a, 3b to be transported to the second reactor 3a, 3b. Generally, the inlet and the outlet 17a, 17b connecting the first and the second reactor 3a, 3b need not be the same opening; however, according to the embodiment of fig. 1 the gas inlet also functions as a gas outlet depending on the flow direction. The direction of the flow between the reactors is determined by a fan 4 or booster and a valve system, normally the system comprises a single fan forcing the gaseous medium in one direction and four valves directing the gaseous medium either to reactor 3a or to reactor 3b.

One or more electrical heating elements 16 heat the flow of gaseous medium passing through the piping means 15 forming a gas-connection between the hot end of the second reactor and the hot end of the first reactor. The electrical heating elements either heat the gaseous medium at one position or at two positions as the heating position may depend on the flow direction. The conduit 15a, 15b may also include one or more catalyst zone 2 holding a catalyst.

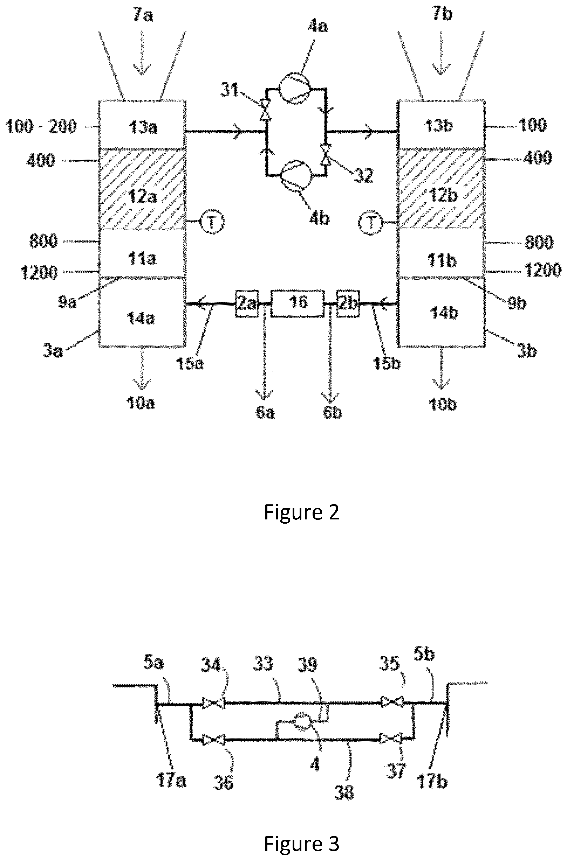

Economic considerations may determine whether it is most desirable to have a centrally positioned heating element 16 having a catalyst zone 2a and 2b in each flow direction as illustrated in fig. 2, allowing for heated gaseous medium to pass a catalyst zone after having passed the heating zone, or alternatively to have a centrally positioned catalyst zone 2 having a heating zone 16a and 16b on each side as illustrated in fig. 1, also allowing for heated gaseous medium to pass through the catalyst zone 2. In the embodiment of figure 2 either one heating zone may be active depending on the flow direction or both heating zones may be active during operation independent of flow direction.

After the gaseous medium has passed through the outlet 1a, 1b from the second reactor and before the gaseous medium is heated, a part of the relatively cold flow of gaseous medium is removed from the conduit 15a, 15b as product gas through an outlet 6a or 6b. Alternatively, the product gas may be removed directly from the ash section 14a, 14b of the reactor. The outlets 6a and 6b are controlled by a valve or a pump for releasing product gas.

The catalyst zone 2 may function as a heat storing means in order to further stabilize the temperature of the circulating gas during operation, this is especially advantageous if heating is shifted between different heating elements or heating zones when the flow direction changes. The catalyst may comprise metal oxides or other known and suitable catalyst for cracking of impurities in the product gas. Impurities in the form of hydrocarbons will be removed when the product gas passes through the catalyst zone 2 as cracking of the hydrocarbons impurities then occurs.

The feed inlet 7a, 7b of each reactor 3a, 3b function in such a way that the feed material is either fed in batches into the reactors or alternatively in a continuous or semi-continuous way into the reactors, where semi-continuous means that the feed enters in smaller batches at smaller time intervals. The connection between the inlets 7a, 7b and the reactors 3a, 3b is constructed in such a way that no gaseous medium from the reactor 3a, 3b escapes through the feed inlet 7a, 7b during the feeding process and only small amounts of air enters into the reactor. Hence, the construction of the connection between the feed inlet 7a, 7b and the reactors 3a, 3b may comprise a valve or wheel 8a, 8b for allowing feed into the reactor while preventing a gaseous medium from escaping through the feed inlet. Further, the reactors 3a, 3b may be constructed in such a way that the pressure in the reactor is below atmospheric pressure which prevents a gaseous medium from escaping through the feed inlet 7a, 7b.

The feed material suitable for this invention is a biomass primarily in solid form e.g. wood chip. The wood chip may be from sources such as e.g. conifers, pica e.g. spruce, pinus e.g. pine. The feed material should be packed loose enough in the reactor to allow the gaseous medium to flow up through the biomass section 12a, 12b to the upper section 13a, 13b of the first reactor, without forming paths though the material. Hence, therefore sawdust and the like are not suitable as a single source of feed material for the present invention, but it could be used if e.g. mixed with a coarser material or if the sawdust is packed into pellets or briquettes. Wood chip suitable for the present invention may preferably comprise a size between 3.5 -120 mm, 3.5-100 mm, 10 -100 mm, 30-60mm, or a combination of the mentioned sizes in the smallest dimension.

Charcoal is formed from pyrolysis of organic material in the temperature interval between 400-800 °C, at temperatures above 800 °C the charcoal is pyrolyzed and converted into ashes. The amount of charcoal in the first reactor, i.e. the thickness of the charcoal section 11a, 11b, can therefore be controlled by controlling the temperature of the gaseous medium passing into the first reactor and by controlling the flow rate of gaseous medium entering into the first reactor.

If the temperature of the incoming gas in the first reactor is relatively low i.e. below 1200°C, the temperature zone below 800°C will be dominating which means that charcoal will build up in the first reactor i.e. the thickness of the charcoal section 11a, 11b will increase and the thickness of the biomass section 12a, 12b will be reduced. If the temperature of the incoming gas is relatively high i.e. above 1300 °C, the charcoal in the charcoal section 11a, 11b will be converted into ashes and the thickness of the charcoal section 11a, 11b will be reduced.

When the apparatus is subjected to alternating operation, the content in the second biomass reactor remains relatively unaffected in the time periods where the biomass reactor acts as second reactor as the temperature of the gaseous medium is too low, i.e. below approximately 400 °C, to effect any changes in the biomass content. The biomass contained in the second biomass reactor will be dried and the biomass and the charcoal will act as respectively filter and catalyst for impurities in the circulating gaseous medium.

The pyrolysis releases a gaseous product comprising hydrocarbons, hydrogen (H₂), water (H₂O), carbon monoxide (CO), carbon dioxide (CO₂) and tar and further creates char and ash from the biomass such as wood chip. As the apparatus of the present invention has no or restricted access of air, the content of nitrogen in the product gas is very low compared to gas produced from the same feed material in other apparatuses.

The gaseous product produced in the first reactor passes through the feed material and charcoal in the second reactor and is thereby heated as the biomass and charcoal contained in the second reactor normally will maintain a high temperature as the periods where the second reactor is not subjected to heat is relatively low compared to the time it takes to cool the mass contained in the second reactor. When the gaseous product is passed through the charcoal section 11a, 11b, impurities are removed from the mixed gaseous product by thermal cracking. Thermal cracking removes impurities such as e.g. large hydrocarbon molecules and tar by breaking the larger hydrocarbon into smaller molecules. Once the gaseous product has passed through the charcoal it becomes a product gas. The product gas is passed through the catalyst and additional impurities from the product gas are removed. The flow direction of the gaseous medium circulating within the system is alternated from first flowing from the reactor 3a to the reactor 3b to then flow from the reactor 3b to the reactor 3a in order to maintain a temperature profile within the system as illustrated in figure 2. The flow direction of the gas may be reversed every 5-15 minutes to keep the temperature profile illustrated in figure 2. The period which passes before the flow is reversed depend on the heat capacity of the charcoal layer, and the heat capacity of the charcoal layer e.g. depends on the type and structure of the feed material.

The apparatus operates in the following way:
Start up: The two reactors 3a, 3b are filled with feed material such as wood chips or the like. Heating of the system is initiated by heating a starter gaseous medium such as e.g. hydrogen, nitrogen or oxygen gas, or possibly by heating the air present in the system by the electrical heating element(s) 16 and then circulating the starter gaseous medium through the two reactors in one direction until a desired temperature profile is reached in the first reactor.

The starter gaseous medium is passed through the feed material and as the temperature increase to above 400°C part of the feed material is converted to charcoal by pyrolysis. By continuously circulating the starter gaseous medium through the reactors of the system in one direction the following layers and temperature profile is created in the first reactor:
1) a charcoal layer is formed in the charcoal section 11a having a temperature going from 1200-800 °C
2) feed material partly converted to charcoal in the section having a temperature from 800-400 °C and unconverted feed material in the section having a temperature from 400-100 °C in the biomass section 12a ,
3) the upper section of the reactor 13a having a temperature going from 200-70 °C normally around 100 °C.

To create a similar temperature profile in the second reactor 3b the flow of the starter gaseous medium is reversed. When the desired temperature profile is obtained in the second reactor, the flow direction is reversed again and this continues until a stable temperature profile has been obtained in both reactors, which is the case when shifting the direction of the circulating gaseous medium does not result in a significant cooling of the content of the second reactor. The time used to start up the system will depend on the size of the system i.e. primarily the volume of contained biomass.

Operation: During operation a desired temperature profile is maintained by continuously heating at least a portion of the gaseous medium in the system by the heating element 16 to reach a temperature of 1200-1300 °C. Optionally, the gaseous medium is passed through the catalyst section 2. The gaseous medium is circulated to the first reactor 3a through the conduit 15a. The heated gaseous medium enters the reactor at the bottom section 14a through the inlet 1a and is circulated up through the charcoal layer in section 11a of the first reactor. In section 11a the heated gaseous medium reacts with the charcoal layer and due to the high temperature of the incoming gas the charcoal is gasified and thereby broken down. The temperature of the heated gaseous medium will drop to 800 °C while the heated gaseous medium flows through the charcoal layer in section 11a to section 12a.

In section 12a the heated gaseous medium flows through the feed material layer with a temperature range from 800-400 °C where gasification occurs and char and VOC are released from the biomass producing an impure product gas. The impure product gas flows further up through the top section feed material layer with a temperature range form 400-100 °C.

The impure product gas is transported from the top section 13a of the first reactor 3a to the second reactor 3b through the conduit 5a, 5b and by the flow created by the fan 4 and valve system. The impure product gas enters upper section of 13b of the second bioreactor 3b where the temperature is approximately 100 °C. The impure product gas flows through the feed material layer in section 12b with a temperature profile going from 100-800 °C, thus when the impure product gas flows through the second reactor the content of the second reactor is cooled while the product gas is re-heated.

Following the passage through the feed material in section 12b of the second reactor 3b the impure product gas flows through the charcoal layer in section 11b with a temperature profile going from 800-1200 °C. By passaging the impure product gas through the charcoal layer of the second reactor 3b impurities such as tar and other VOC molecules are removed from the impure product gas through the process of thermal cracking. After passage through the charcoal layer in section 11b in the second reactor 3b the impure product gas flows to the lower section 14b of the second reactor 3b through the conduit 15b to a catalyst section 2, 2b.

In the catalyst zone 2 impurities still present in the impure product gas following passage though the charcoal layer section 11b in the second reactor 3b are removed from the product gas by catalytic cracking. Following treatment in the catalyst zone 2 the product gas comprises VOC molecules < 1%, CO, CO₂, H₂.

A part of the product gas is removed from the system through the outlet 6a which is positioned downstream of the catalyst zone 2.

When the process and apparatus is in operating mode, a part of the product gas produced in the system is continuously removed whereas the remaining part of the product gas becomes the heated gaseous medium entering the first reactor.

The flow direction of the gaseous medium in the system from a first reactor to a second reactor is maintained for the time necessary to uphold the desired temperature profile which may be similar or the same as the temperature profile disclosed in figure 2. To prevent the temperature from dropping in one or both reactors the flow direction is reversed regularly from a first operation mode where the gaseous medium is heated to a high temperature and then flows through first one reactor to a second reactor and then to a second operation mode where the gaseous medium after heating flows through the second reactor to the first reactor and the reversing of the direction of flow is effectuated by a fan 4 and valve system placed between the two biomass reactors. By reversing the flow direction to flow from the second reactor to the first reactor gasification of the biomass will now occur in what was previously the second reactor. The flow direction may be maintained in one direction for approximately 7-10 minutes before the flow direction is reversed and will run in the reversed direction for approximately 7-10 minutes before the direction is reversed again.

One fan and valve system is illustrated in figs. 1 and 2, this system comprises two separated conduits each provided with a fan or pump 4a and 4b and a valve 31, 32 upstream of each fan. In fig. 2 where the gaseous medium flows from left to right the valve 31 positioned upstream in the same conduit as the fan 4a is open and the fan 4a is on. The valve 32 positioned upstream and in same conduit as the fan 4b is closed and the fan 4b is off. When the flow direction is changed 1) the valve positioned upstream and in the same conduit as the fan 4b is opened, 2) the fan 4b is turned on, 3) the fan 4a is turned off and 4) the valve 31 is closed.

A second fan and valve system is illustrated in fig. 3, this system comprises one fan. The inlet/outlet 17a for gaseous medium from a first reactor 3a is connected to a main gas line 33 with a conduit 5a. The main gas line 33 has two valves 34, 35 and a secondary gas line 38 has two valves 36, 37. The secondary gas line 38 is connected to at one end the main gas line 33 between the valve 34 and the inlet/outlet 17a from the first reactor and at the other end between the valve 35 and an inlet/outlet 17b of a second reactor thereby forming a loop. One-way fan or pump 4 is placed in a conduit 39 connecting the main gas line 33 and the secondary gas line 38. The main gas line 33 is connected through a conduit 5b to the inlet/outlet 17b of the second reactor. The four valves 34, 35, 36 and 37 and the fan/ pump 4 are used to control the direction of transport of the gaseous medium. In a first operating mode the first valve 34 and the second valve 37 are open and the third valve 36 and the fourth valve 35 are closed.

Generally, the direction of the gaseous medium in the apparatus can be controlled by a fixed time interval, real time measurement of e.g. gasses or temperature in the apparatus, or by other controlling factors in the process.

### Examples

### Example 1

An apparatus as shown in figure 1 was used to produce a product gas from wood chip.

In one test run of the apparatus as shown in figure 1, 200 kg wood chip was used as feed material. 100 kg of wood chip was feed into each reactor. The initial air in the apparatus comprising the units shown in fig. 1 was circulated and heated to an operational temperature of 1000-1300 °C by the electrical heater for 10 minutes. As the air is heated and circulated volatile components are released from the wood contained in the reactors and the initial air is mixed with gaseous components to constitute a gaseous medium.

The gaseous medium in the system was transported through the system at a velocity of 2 m/s. The direction of the flow of the heated air in the system was reversed every 10 minutes to obtain and maintain the temperature profile shown in figure 2 in the system. Following start up and then 30 minutes of operation of the system with the shown temperature profile a product gas with a chemical combination as disclosed in table 1 was extracted from the system. The system was producing a constant flow of 0,5 m³/min of product gas.

**Table 2**

| | |
|---|---|
| Hydrogen | 45 vol% |
| Carbon monoxide | 30 vol% |
| Carbon dioxide | 25 vol% |
| Methane | 4 vol% |
| Oxygen | 0 vol% |
| Nitrogen | 0.5 vol% |
| Tar and VOC | <0.1 vol% |

Nitrogen is an unwanted component in the product gas and the content of nitrogen in the product gas produced by the invention is generally very low. Generally, the nitrogen content in the product gas can be kept under 1 vol% when using the claimed method. Also, tar is an unwanted component in the product gas and the tar content of the product gas obtained by the invention is also very low. Generally, the tar content in the product gas can be kept under 0.2 vol% when using the claimed method.

By controlling the temperature in the first and the second reactor, and by controlling the addition of water to the process, it will be possible to push the equilibrium of the processes taking place in a direction where a desired composition of the product gas is obtained. However, as a series of processes take place during the gasification, it is not possible to completely control the composition of the product gas, and also the composition of the product gas will also depend on other parameters than the process conditions such as the available feed material and the actual apparatus in which the gasification takes place.

When describing the embodiments of the present invention, the combinations and permutations of all possible embodiments have not been explicitly described. Nevertheless, the mere fact that certain measures are recited in mutually different dependent claims or described in different embodiments does not indicate that a combination of these measures cannot be used to advantage. The present invention envisages all possible combinations and permutations of the described embodiments.

## Claims

1. A method for the production of product gas from carbonaceous feed material, comprising the steps of:
a) heating a gaseous medium by thermal energy;
b) transporting the heated gaseous medium to a first reactor (3a) containing carbonaceous feed material;
c) heating the carbonaceous feed material in the first reactor (3a) to a temperature of at least 400 °C by means of the heated gaseous medium so as to form components of a product gas, directing the gaseous medium of step c) to a second reactor (3b) containing carbonaceous feed material and forcing the gaseous medium through the carbonaceous feed material of the second reactor (3b);
d) withdrawing at least part of the product gas after the gaseous medium has passed the carbonaceous feed material of the second reactor (3b), and
e) recirculating the rest of the gaseous medium to the first reactor (3a) thereby continuing the production of product gas through steps (a)-(d);
f) continuing the circulation of gaseous medium from the first reactor (3a) to the second reactor (3b) until a set point defined by a desired value of a temperature measured in the layer of charcoal and/or carbonaceous material in the second reactor (3b) has been reached and/or until a pre-set time has been reached; and then
g) reversing the direction in which the gas is circulated by means of a system constituted of at least one fan (4, 4a,4b;) providing flow in one direction and a valve system (34,35,36,37;31,32) whereby the withdrawal of at least part of the product gas in step d) takes place after passage of the carbonaceous material of the first reactor (3a) and the rest of the gaseous medium is recirculated to the second reactor (3b) in step e);
wherein the heating performed in step (a) is provided by an electrical source.

2. The method as claimed in claim 1, **characterized in that** the temperature of the gaseous medium in step (a) is above 800°C, e.g. above 1000°C and e.g. the temperature is between 1100 and 1400 °C.

3. The method as claimed in claim 1 or 2, **characterized in that** a layer of charcoal is formed in the first and second reactors (3a,3b).

4. The method as claimed in any of the claims 1 to 3, **characterized in that** the gaseous medium before step d) is forced through a catalysing zone (2) wherein Volatile Organic Compounds (VOC) are converted to hydrogen, CO and CO₂.

5. The method as claimed in any of the claims 1 to 4, **characterized in that** the gaseous medium contains vaporised H₂O so as to break down charcoal formed from the carbonaceous feed material when the heated gaseous medium containing H₂O passes through the carbonaceous feed material.

6. The method as claimed in claim 1 to 5, **characterized in that** the direction of the circulation of the gaseous medium is reversed after 5-30 minutes, normally after 5-15 minutes.

7. An apparatus for producing product gas from carbonaceous materials, said apparatus comprising at least two reactors, a first reactor (3a) and a second reactor (3b), each reactor comprising an inlet for feed material (8a, 8b), an inlet for hot gaseous medium (1a, 1b), an outlet (17a, 17b) for gaseous medium including product gas, the apparatus further comprising piping means (5a,5b) through which the gaseous medium from said first reactor (3a,3b) can flow from an outlet (17a, 17b) of this reactor to an inlet (17a, 17b) of the second reactor (3b,3a), said piping means (5a,5b) comprising a system constituted of at least one fan (4, 4a, 4b) providing a flow in one direction and a valve system (34,35,36,37;31,32), allowing gaseous medium to be transported in both directions from one reactor to the other, piping means (15) through which the gaseous medium can flow from an outlet (1a, 1b) of the second reactor (3b) to an inlet (1a, 1b) of the first reactor (3a), and heating means (16) in the form of one or more heating units dimensioned to heat a flowing gaseous medium upstream of the first reactor (3a, 3b) and downstream of the second reactor (3b, 3a), **characterized in that** the heating means (16) are electrical heating means.

8. The apparatus as claimed in claim 7, **characterized in that** it comprises a catalyst zone (2) placed between the outlets (1a, 1b) of the second reactor (3a, 3b) and the heating means (16a,16b).

9. The apparatus as claimed in any of claims 7 to 8, wherein the first reactor (3a) and the second reactor (3b) each has an outlet for ash (10a, 10b) at a low position at the lower end and an inlet for carbonaceous feed material (7a,7b) at a high position at the upper end, each outlet and inlet allowing for continuous and/or batch-wise release or feeding.

10. The apparatus as claimed in any of the claims 7-9, wherein the piping means, reactors, heating element(s) and possible catalyst zone(s) are constructed in such a way that inlet of air or other oxygen containing gas is completely avoided or restricted to what might enter the apparatus together with the feed material.

11. The apparatus as claimed in any of the claims 7-10, wherein one or both the reactors (3a, 3b) is/are counter-current fixed bed gasifier(s).

12. The apparatus as claimed in any of the claims 7-11, wherein the first reactor (3a) comprises a temperature transmitter reading the temperature in the layer of carbonaceous material and/or the second reactor (3b) comprises a temperature transmitter reading the temperature in the layer of carbonaceous material.

## Patentansprüche

1. Verfahren zur Herstellung von Produktgas aus kohlenstoffhaltigem Einsatzmaterial, das die folgenden Schritte umfasst:
a) Erhitzen eines gasförmigen Mediums durch thermische Energie;
b) Transportieren des erhitzten gasförmigen Mediums zu einem ersten Reaktor (3a), der kohlenstoffhaltiges Einsatzmaterial enthält;
c) Erhitzen des kohlenstoffhaltigen Einsatzmaterials im ersten Reaktor (3a) auf eine Temperatur von mindestens 400°C mittels des erhitzten gasförmigen Mediums, zur Bildung von Komponenten eines Produktgases, Leiten des gasförmigen Mediums aus Schritt c) in einen zweiten Reaktor (3b), der ein kohlenstoffhaltiges Einsatzmaterial enthält und Zwingen des gasförmigen Mediums durch das kohlenstoffhaltige Einsatzmaterial des zweiten Reaktors (3b);
d) Zurückziehen zumindest eines Teils des Produktgases, nachdem das gasförmige Medium das kohlenstoffhaltige Einsatzmaterial des zweiten Reaktors (3b) durchlaufen hat, und
e) Rückführen des restlichen gasförmigen Mediums in den ersten Reaktor (3a) und dadurch Fortsetzen der Erzeugung von Produktgas der Schritte (a)-(d);
f) Fortsetzen der Zirkulation des gasförmigen Mediums aus dem ersten Reaktor (3a) in den zweiten Reaktor (3b), bis ein Sollwert, definiert durch einen gewünschten Wert einer in der Schicht aus Holzkohle und/oder kohlenstoffhaltigem Material im zweiten Reaktor (3b) gemessenen Temperatur erreicht ist und/oder bis eine voreingestellte Zeit erreicht ist; und dann
g) Reversieren der Richtung, in der das Gas mittels eines Systems, das aus mindestens einem Strömung in eine Richtung bereitstellenden Gebläse (4, 4a, 4b;) und einem Ventilsystem (34,35,36,37;31,32) besteht, zirkuliert wird, wodurch die Entnahme zumindest eines Teils des Produktgases in Schritt d) nach Durchlauf des kohlenstoffhaltigen Materials durch den ersten Reaktor (3a) erfolgt und der Rest des gasförmigen Mediums in Schritt e) in den zweiten Reaktor (3b) zurückgeführt wird;
wobei das in Schritt (a) durchgeführte Erhitzen durch eine elektrische Quelle bereitgestellt wird.

2. Verfahren nach Anspruch 1, **dadurch gekennzeichnet, dass** die Temperatur des gasförmigen Mediums in Schritt (a) über 800°C liegt, z.B. über 1000°C und die Temperatur z.B. zwischen 1100 und 1400°C liegt.

3. Verfahren nach Anspruch 1 oder 2, **dadurch gekennzeichnet, dass** eine Schicht aus Holzkohle im ersten und zweiten Reaktor (3a,3b) gebildet wird.

4. Verfahren nach einem der Ansprüche 1 bis 3, **dadurch gekennzeichnet, dass** das gasförmige Medium vor dem Schritt d) durch eine Katalysatorzone (2) gezwungen wird, wobei flüchtige organische Verbindungen (VOC) in Wasserstoff, CO und CO₂ umgewandelt werden.

5. Verfahren nach einem der Ansprüche 1 bis 4, **dadurch gekennzeichnet, dass** das gasförmige Medium verdampftes h₂O enthält, um aus dem kohlenstoffhaltigen Einsatzmaterial gebildete Holzkohle abzubauen, wenn das erhitzte gasförmige Medium, das h₂O enthält, das kohlenstoffhaltige Einsatzmaterial durchläuft.

6. Verfahren nach Anspruch 1 bis 5, **dadurch gekennzeichnet, dass** die Richtung der Zirkulation des gasförmigen Mediums nach 5 bis 30 Minuten, normalerweise nach 5 bis 15 Minuten, umgekehrt wird.

7. Vorrichtung zur Herstellung von Produktgas aus kohlenstoffhaltigen Materialien, wobei die Vorrichtung mindestens zwei Reaktoren umfasst, einen ersten Reaktor (3a) und einen zweiten Reaktor (3b), wobei jeder Reaktor einen Einlass für Einsatzmaterial (8a, 8b), einen Einlass für heißes gasförmiges Medium (1a, 1b), einen Auslass (17a, 17b) für gasförmiges Medium einschließlich Produktgas umfasst, wobei die Vorrichtung ferner Leitungsmittel (5a,5b) umfasst, durch die das gasförmige Medium aus dem ersten Reaktor (3a,3b) von einem Auslass (17a, 17b) dieses Reaktors zu einem Einlass (17a, 17b) des zweiten Reaktors (3b,3a) strömen kann, wobei die Leitungsmittel (5A,5b) ein System, das aus mindestens einem eine Strömung in eine Richtung bereitstellenden Gebläse (4, 4A, 4b) und einem Ventilsystem (34,35,36,37;31,32), das es dem gasförmigen Medium ermöglicht, von einem Reaktor zum anderen in beide Richtungen transportiert zu werden, Leitungsmitteln (15), durch die das gasförmige Medium von einem Auslass (1a, 1b) des zweiten Reaktors (3b) zu einem Einlass (1a, 1b) des ersten Reaktors (3a) strömen kann, und Heizmitteln (16) in Form von einer oder mehreren Heizeinheiten, die dimensioniert sind, um ein strömendes gasförmiges Medium stromaufwärts des ersten Reaktors (3a, 3b) und stromabwärts des zweiten Reaktors (3b, 3a) zu erhitzen, besteht, **dadurch gekennzeichnet dass** die Heizmittel (16) elektrische Heizmittel sind.

8. Vorrichtung nach Anspruch 7, **dadurch gekennzeichnet, dass** sie eine zwischen den Auslässen (1a, 1b) des zweiten Reaktors (3a, 3b) und den Heizmitteln (16a,16b) angeordnete Katalysatorzone (2) umfasst.

9. Vorrichtung nach einem der Ansprüche 7 bis 8, wobei der erste Reaktor (3a) und der zweite Reaktor (3b) jeweils einen Auslass für Asche (10a, 10b) an einer niedrigen Position am unteren Ende und einen Einlass für kohlenstoffhaltiges Einsatzmaterial (7a,7b) an einer hohen Position am oberen Ende aufweisen, wobei jeder Auslass und Einlass eine kontinuierliche und/oder chargenweise Freisetzung oder Zufuhr ermöglichen.

10. Vorrichtung nach einem der Ansprüche 7 bis 9, wobei die Leitungsmittel, Reaktoren, Heizelement(e) und mögliche Katalysatorzone(n) derart aufgebaut sind, dass ein Einlass von Luft oder anderem sauerstoffhaltigem Gas vollständig vermieden oder auf das, was zusammen mit dem Einsatzmaterial in die Vorrichtung eintreten könnte, begrenzt ist.

11. Vorrichtung nach einem der Ansprüche 7 bis 10, wobei einer oder beide Reaktoren (3a, 3b) Gegenstrom-Festbettvergaser ist/sind.

12. Vorrichtung nach einem der Ansprüche 7 bis 11, wobei der erste Reaktor (3a) einen Temperaturgeber umfasst, der die Temperatur in der Schicht aus kohlenstoffhaltigem Material ausliest und/oder der zweite Reaktor (3b) einen Temperaturgeber umfasst, der die Temperatur in der Schicht aus kohlenstoffhaltigem Material ausliest.

## Revendications

1. Procédé de production de gaz produit à partir d'un matériau d'alimentation carboné, comprenant les étapes suivantes :
a) le chauffage d'un milieu gazeux par l'énergie thermique ;
b) le transport du milieu gazeux chauffé vers un premier réacteur (3a) contenant un matériau d'alimentation carboné ;
c) le chauffage du matériau d'alimentation carboné dans le premier réacteur (3a) à une température d'au moins 400 °C au moyen du milieu gazeux chauffé de manière à former des composants d'un gaz produit, la direction du milieu gazeux de l'étape c) vers un deuxième réacteur (3b) contenant un matériau d'alimentation carboné et le forcement du milieu gazeux à travers le matériau d'alimentation carboné du deuxième réacteur (3b) ;
d) le retrait d'au moins une partie du gaz produit après que le milieu gazeux a passé le matériau d'alimentation carboné du deuxième réacteur (3b), et
e) la recirculation du reste du milieu gazeux au premier réacteur (3a) poursuivant ainsi la production du gaz produit par les étapes (a)-(d) ;
f) la circulation continue du milieu gazeux à partir du premier réacteur (3a) vers le deuxième réacteur (3b) jusqu'à ce qu'un point établi par une valeur souhaitée d'une température mesurée dans la couche de charbon de bois et / ou de matériau carboné dans le deuxième réacteur (3b) soit atteint et / ou jusqu'à ce qu'un temps prédéfini ait été atteint ; et ensuite
g) l'inversion de la direction dans laquelle le gaz est circulé au moyen d'un système constitué d'au moins un ventilateur (4, 4a,4b;) fournissant un écoulement dans une direction et un système de vanne (34,35,36,37;31,32) le retrait d'au moins une partie du gaz produit à l'étape d) ayant lieu après le passage du matériau carboné du premier réacteur (3a) et le reste du milieu gazeux est circulé vers le deuxième réacteur (3b) à l'étape e) ;
dans lequel le chauffage effectué à l'étape (a) est fourni par une source électrique.

2. Procédé selon la revendication 1, **caractérisé en ce que** la température du milieu gazeux à l'étape (a) est supérieure à 800 ° C, par ex. au-dessus de 1000 ° C et par ex. la température est comprise entre 1100 et 1400 ° C.

3. Procédé selon la revendication 1 ou 2, **caractérisé en ce qu'**une couche de charbon de bois est formée dans les premier et deuxième réacteurs (3a,3b)

4. Procédé selon l'une quelconque des revendications 1 à 3, **caractérisé en ce que** le milieu gazeux avant l'étape d) est forcé à travers une zone de catalyse (2) dans laquelle les composés organiques volatils (COV) sont convertis en hydrogène, CO et CO₂.

5. Procédé selon l'une quelconque des revendications 1 à 4, **caractérisé en ce que** le milieu gazeux contient du H₂O vaporisé de manière décomposer du charbon de bois formé à partir du matériau d'alimentation carboné lorsque le milieu gazeux chauffé contenant H₂O passe à travers le matériau d'alimentation carboné.

6. Procédé selon les revendications 1 à 5, **caractérisé en ce que** la direction de la circulation du milieu gazeux est inversée après 5-30 minutes, normalement après 5-15 minutes.

7. Dispositif de production de gaz produit à partir de matériaux carbonés, ledit dispositif comprenant au moins deux réacteurs, un premier réacteur (3a) et un deuxième réacteur (3b), chaque réacteur comprenant une entrée pour la matière première (8a, 8b), une entrée pour le milieu gazeux chaud (1a, 1b), une sortie (17a, 17b) pour le milieu gazeux comprenant le gaz produit, le dispositif comprenant en outre des moyens de canalisation (5a,5b) à travers lesquels le milieu gazeux dudit premier réacteur (3a,3b) peut s'écouler depuis une sortie (17a, 17b) de ce réacteur vers une entrée (17a, 17b) du deuxième réacteur (3b,3a), lesdits moyens de canalisation (5a,5b) comprenant un système constitué d'au moins un ventilateur (4, 4a, 4b) fournissant un écoulement dans une direction et un système de vanne (34,35,36,37;31,32), permettant au milieu gazeux d'être transporté dans les deux directions de l'un réacteur à l'autre, moyens de canalisation (15) à travers lesquels le milieu gazeux peut s'écouler d'une sortie (1a, 1b) du deuxième réacteur (3b) à une entrée (1a, 1b) du premier réacteur (3a), et des moyens de chauffage (16) dans la forme d'une ou plusieurs unités de chauffage dimensionnées pour chauffer un milieu gazeux en écoulement en amont du premier réacteur (3a, 3b) et en aval du deuxième réacteur (3b, 3a), **caractérisé en ce que** les moyens de chauffage (16) sont des moyens de chauffage électrique.

8. Dispositif selon la revendication 7, **caractérisé en ce qu'**il comprend une zone de catalyseur (2) placée entre la sortie (1a, 1b) du deuxième réacteur (3a, 3b) et les moyens de chauffage (16a,16b).

9. Dispositif selon l'une quelconque des revendications 7 à 8, dans lequel le premier (3a) et le deuxième réacteur (3b) ont chacun une sortie pour les cendres (10a, 10b) dans une position basse à l'extrémité inférieure et une entrée pour le matériau d'alimentation carboné (7a, 7b) à une position haute à l'extrémité supérieure de chaque sortie et entrée permettant une libération ou une alimentation continue et / ou par lots.

10. Dispositif selon l'une quelconque des revendications 7 à 9, dans lequel les moyens de canalisation, les réacteurs, le ou les éléments chauffants et les éventuelles zones de catalyseur sont construits de telle manière que l'entrée d'air ou d'un autre gaz contenant de l'oxygène est complètement évitée ou limitée à ce qui pourrait pénétrer dans le dispositif avec le matériau d'alimentation.

11. Dispositif selon l'une quelconque des revendications 7 à 10, dans lequel l'un des réacteurs (3a, 3b) ou les deux sont des gazéificateurs à lit fixe à contre-courant.

12. Dispositif selon l'une quelconque des revendications 7 à 11, dans lequel le premier réacteur (3a) comprend un transmetteur de température lisant la température dans la couche de matériau carboné et / ou le deuxième réacteur (3b) comprend un transmetteur de température lisant la température dans la couche de matériau carboné.
